# EUROPEAN PATENT SPECIFICATION

(11) **EP 3 761 838 B1**
(45) Date of publication and mention of the grant of the patent: **17.05.2023**
(21) Application number: 19721719.3
(22) Date of filing: 04.03.2019
(51) Int. Cl.: A47J 37/12

(54) **IMPROVEMENTS IN FRYING TECHNOLOGY**
VERBESSERUNGEN AN DER FRITTIERTECHNOLOGIE
PERFECTIONNEMENTS APPORTÉS À UNE TECHNOLOGIE DE FRITURE

(30) Priority: 05.03.2018 GB 201803519
(43) Date of publication of application: 13.01.2021
(73) Proprietor: Fripura Limited, Hull East Yorkshire HU1 2LD (GB)
(72) Inventor: CLAY, Andrew J, Harrogate, Yorkshire HG2 0LA (GB)
(74) Representative: Harrison, Michael Robert
(86) International application number: PCT/IB2019/051729
(87) International publication number: WO 2019/171251

(56) References cited:
- WO-A1-2015/092387
- US-A1- 2009 049 994

## Description

### FIELD OF THE INVENTION

This invention relates to improvements in technology relating to methods for the in situ treatment of cooking oils and fats.

### INTERPRETATION

In this patent specification references to oils should be interpreted as being references to animal, vegetable, nut or synthetic oils and fats (which are generally solid at room temperatures). References to fryers herein should be taken as including any frying equipment, chamber, pan, tank, commercial, domestic or industrial fryer.

### BACKGROUND TO THE INVENTION

Deep fat frying has become one of the most popular methods of cooking in domestic, restaurant and industrial establishments throughout the World. Because of the high temperatures involved (typically 160 to 200°C) it is relatively quick, cooks food right through to the middle, generates a distinctive crust on the food and perhaps most importantly produces rich and complex flavours and food textures, which are very appealing to the consumer.

Frying, whether carried out in oils or fats, however also has a number of well-known disadvantages.

Cooking oil is expensive: high end olive oils are more expensive per litre than petrol or diesel and the price of even lower end cooking oils is comparable to that of petrol or diesel. Cooking oils have to be replaced frequently as the oils degrade during the cooking process, as more fully explained hereinafter. Also cooking oils (and their breakdown products) are absorbed by the food cooked in them which therefore necessitates the operator of a fryer to regularly keep the oil or fat topped up by the addition of extra cooking oil or fat. Cooking in oil therefore comes at a relatively high price compared to boiling in water or roasting in air.

The frequent changing of cooking oil in kitchens, restaurants and food preparation industrial sites is also a labour intensive and laborious task, which is costly and increases equipment down-time.

Unfortunately it is not possible to extend the life of cooking oils and fats merely by filtering out the often carbonised insoluble food debris, which frequently accumulates within them. During use cooking oils and fats do not remain unaltered but begin to chemically breakdown. Cooking oils and fats are commonly referred to as triglycerides but are in fact triacylglycerols: i.e. triesters of glycerol (1, 2, 3 propanetriol, which is commonly referred to as glycerine) and three fatty acids. The fatty acids do not need to be of the same type and frequently are not). Common chain lengths for the fatty acids, as determined by gas liquid chromatography, are 12 to 24 carbon atoms with 16 and 18 being particularly favoured. The breakdown of such triglycerides is complex, dependent on numerous factors and is subject to numerous feedback effects but involves three well-understood basic mechanisms: oxidation, polymerisation and hydrolysis.

### Oxidation

Oxidation occurs when air comes in contact with frying oil, (see for example Josephson and Lindsey 1987, Journal of Food Sciences, 52, 328 and Fischer and Muller 1991, Potato Research, 34, 159). Oxygen from the air reacts with the two unsaturated carbons at the double-bond via a free radical initiated reaction. The oxidation reaction is promoted by high cooking temperatures (typically 190°C and above), the presence of metals (including in particular copper and iron) and the presentation to the air of a large surface area of the oil as well as exposure to UV light, which promotes free radical formation. Initially hydroperoxides are produced but these are unstable and at frying temperatures they rapidly break down (via e.g. fission, dehydration and free radical formation) to produce a wide array of secondary oxidation products including polymers, acids, alcohols, esters, aldehydes, methyl ketones, lactones, alkanes, aromatics and other hydrocarbons, (see Belitz and Grosch 1999, Food Chemistry, 2nd edition, Springer-Verlag, Berlin, p. 211).

Some of these secondary oxidation products are volatile and give rise to both pleasant rich flavours but some are also associated with rancid and offensive flavours. For example only 0.08 ppm of pentane is sufficient to reliably produce rancidity, (Warner et al. (1974) Journal of Food Science, 39, 761). Non-volatile compounds, such as core aldehydes, remain in the oil and are absorbed by the food.

### Polymerisation

When cooking oil breaks down, the resulting products form both volatile low boiling point and non-volatile compounds. The non-volatile higher boiling point compounds remain within the frying oil and readily polymerize at frying temperatures above190°C or in isolated hot spots within the fryer. Such polymerisation products then bond together to form larger clusters, which accumulate as an insoluble layer on the surface of the oil, thus preventing water vapour, evaporating from food cooking in the oil, escaping from the oil's surface and thereby producing dangerous foaming, which can lead to fires and personal injury of kitchen staff.

The presence of the impermeable polymer layer in turn promotes more hydrolysis in what can become a runway feed-back driven process. Polymerisation also leads to an increase in the viscosity of the oil which reduces its ability to effect heat transfer and promotes yet more polymerisation. The increase in viscosity also increases the amount of energy required to effect cooking and thus increases energy bills.

### Hydrolysis

Hydrolysis is caused by the reaction of water (a weak nucleophile) with the ester linkage in the triacylglycerol molecule to produce initially a diaglyceride and a free fatty acid, which then further breakdown to produce various compounds including lactones. The presence of free fatty acids is frequently associated with a characteristic rancid or acidic flavour.

The production of free fatty acids in cooking oils is additionally problematical for several reasons.

Firstly free fatty acids are one of the main constituents of smoke haze and are both a fire and a health hazard. The smoke point of an oil is the temperature at which it is seen to start smoking under specified test conditions. The flashpoint of an oil is the temperature at which volatile products are produced in sufficient concentration and quantity to allow ignition. The fire point of an oil is the temperature at which the rate of production of volatile products is sufficiently high to support continuous combustion of the gases emerging from the surface of the oil.

High levels of free fatty acid are associated with reduced smoke, flash and fire points and are thus a significant fire hazard. For example Weiss (Food Oils and Their Uses, Wesport, The AVI Publishing Co. 1983) found that a free fatty acid composition of 0.04% was associated with a smoke point of 218°C, a flashpoint of 327°C and a fire point of 366°C whereas for the same oil increasing the free fatty acid content to just 1% percent lead to the smoke point decreasing to 160°C, the flashpoint decreasing to 307°C and the fire point dropping to 360°C.

In addition to being a fire hazard, increases in the concentration of free fatty acids (and their break down products) in the cooking oils also has deleterious effects on the preparation of food cooked in the oil.

Fatty acids and some of their breakdown products, having both distinct hydrophobic and hydrophilic regions, act as effective surfactants. The effect of the concentration of surfactants in cooking oil on the properties of the food cooked in such oil is well-known (see e.g. Blumenthal MM A New Look At The Chemistry And Physics Of Deep Fat Frying: Food Technology, 1991, 45:2, 68 -71, 94). When for example chips are cooked in fresh unused cooking oil they are light in colour and do not have the rich complex aromas associated with fried potatoes. The oil, during this "break in" phase has only low levels of surfactants (such as free fatty acids), which means that the oil has a relatively high surface tension which prevents the oil having close contact with the food. The heat from the oil is not effectively transferred across the oil/wet-food barrier and the food is in part boiled rather than fried as the steam emerging from the food pushes a substantial amount of the oil away from its surface. As the oil is used further the amount of free fatty acid and other surfactants increases resulting in improved food quality. During the so-called optimum phase chips cooked in the oil are golden brown in colour and have a significant crust but with relatively low levels of oil being absorbed by the food, which is cooked through to the centre. For example fresh French fries will typically consist of about 10% by weight of oil, when cooking during the so called optimum phase. However as the oil is subject to both further hydrolysis and oxidation, the increase in free fatty acids and other surfactants decreases the surface tension significantly and ensures that the oil can rapidly bridge the otherwise immiscible oil food barrier. This results in the surface of for example chips having a characteristic dark and spotted appearance. Excessive contact with the oil rapidly dries the surface of the food thus trapping moisture in the food and inhibiting heat penetration deeper within the food's centre which therefore typically is undercooked. The resulting greasy chip with an oil content by weight of typically in excess of about 20%, with a dark spotted exterior and undercooked centre, is familiar to many who have eaten at down market fast food establishments, which do not change their cooking oil often enough.

The absorption of excessive amounts of cooking oils by food cooked in the oil also significantly increases the calorific value of the food, thus giving many consumers extra calories they do not need and promoting obesity and the numerous health problems associated with it.

Further the absorption of excessive amounts of cooking oil by food has other important consequences for health. Hydrogenated vegetable oils and fats are widely used in cooking due mainly to their increased stability and shelf-life and their greatly increased resistance to rancidity.

However such oils contain increased amounts of trans-fatty acid side chains on the glycerol backbone, which are a material health hazard. After ingestion most of the initial digestion of cooking oils is accomplished in the stomach via specialist pancreatic enzymes (lipases) and bile secretions. The resultant fatty acids and glycerol are then absorbed by cells lining the intestines called enterocytes, where they are re-esterified into triglycerides and transported to the liver as chylomicrons. When the chylomicrons reach the liver, the fatty acids are repackaged into triacylglycerols and phosphatidylcholine and thence into lipoproteins.

High levels of trans fatty acids in the diet are associated with raised serum levels of low density lipoprotein (LDL) cholesterol and with lower levels of high density lipoprotein (HDL) cholesterol in humans. Raised serum LDL and reduced serum HDL levels are associated with coronary artery disease, increased risk of stroke and elevated blood pressure as they decrease the health of the endothelium, the cells lining the arteries of the body which are essential for good cardiovascular health. Studies in humans further demonstrate that trans fats increase inflammation in the body, a potent risk factor for cardiovascular disease, diabetes, and other diseases. Studies in primates have demonstrated that trans fats cause weight gain, especially increasing abdominal fat, which has the greatest metabolic consequences, and worsens insulin resistance, the precursor to diabetes.

For all these reasons the amount of trans-fatty acids absorbed in the diet should be kept at low levels. One way of achieving that is to reduce the amount of cooking oil absorbed by fried food. That can be achieved by keeping cooking oil at or near its sweet spot (neither too much nor too little cooking oil breakdown product to act as surfactants) for as long as possible, thereby both reducing the amount of oil absorbed by food relative to oil which is near the end of its life and also extending the useful life of the cooking oil.

Various ways have been suggested to prolong the useful life of cooking oils. Some of these involve the step of removing the cooking oil from the fryer, followed by the step of subjecting it to one or more treatment methods to remove the contaminants before finally returning the treated oil back to the fryer. Other methods provide for at least the complete cessation of the cooking process, treatment and then the recommencement of the use of the oil.

### Oil Removal and Treatment Methods

US-A4112129 (Duensing et al., Johns Manville) discloses a method of filtering the cooking oil through a composition comprising by weight (i) 47 to 59 parts diatomite, (ii) 28 to 36 parts synthetic calcium silicate hydrate and (iii) 12 to 24 parts synthetic magnesium silicate hydrate.

US 4681768A (Mulflur W Jospcph et al) discloses a method for the continuous filtration of cooking oil with a cooking oil treatment media made from synthetic calcium silicate. The method involves removal of the oil from the fryer, passing it through the cooking oil treatment media and then passing it back into the fryer.

GB 2006729 (Johns Manville) discloses a method for filtering used cooking oils to remove free fatty acids, which uses synthetic calcium silicate but does not disclose an in situ solution suitable for unadapted fryers.

US 5870945 discloses a filter cartridge for fitting to a fryer, which includes a mesh housing for containing filtering material which is used to treat the cooking oil outside the fryer prior to its return to the fryer.

US 4112129A discloses a method for extending the life of cooking oil by removing free fatty acids which involves treating the oil with a composition of synthetic calcium silicate hydrate and synthetic magnesium silicate hydrate. US 4112129A states that the method can be used with conventional cooking oil filtration systems but does not disclose an in situ solution suitable for unadapted fryers which do not have a filtration system.

EP 0226413A discloses a filter container provided with a removable filter bag but which cannot be used during the cooking operation.

US 6210732 discloses a method of extending the life of cooking oil by the use of a blend of finely milled citric acid and calcium silicate powder, which is added to the hot oil, left for a certain length of time and then removed by filtration. The US 6210732 invention cannot be used during the cooking process.

WO 91/11914A discloses a still further treatment method for used cooking oils which uses an amorphous silica and alumina composition, which is either added to the hot oil and then filtered out or put in a container which is permeable to the oil but not the treatment composition. The invention disclosed cannot be used during the cooking operation.

US 4330564A discloses a method of treating used cooking oil with a composition including a porous carrier, water and a food compatible acid, with the resultant residue being removed by filtration. The invention disclosed cannot be used the cooking operation.

US 3947602A discloses a method of treating cooking oil with a food compatible acid and a suitable adsorbent such as activated carbon. The invention disclosed cannot be used during the cooking operation.

US 5391385A discloses the treatment of cooking oil with a mixture of 60-80% amorphous silica and 20 to 40% alumina, the mixture being placed in a permeable container which is then placed in the oil, the container being permeable to the oil but not to the mixture so that the adsorbent is not released into the oil and no filtration is required.

All the above treatment methods either require removal of the oil from the fryer and its filtration before reuse and/or cannot be carried out during the normal frying operation with standard frying equipment, which does not include in-line filtration equipment and a pump.

### In Situ Treatment of Cooking Oil

Other methods are known for the treatment of cooking oil in the vessel where cooking takes place.

US 4764384A discloses a method of treating used cooking oil with filtering media comprising synthetic amorphous silica, synthetic amorphous magnesium silicate and diatomaceous earth.

US 5354570A discloses a method of frying food in cooking oils with a porous rhyolitic powder which selectively reduces the concentration of certain surfactants, whilst the cooking process is on-going.

JP 07-148073A discloses a method of treating cooking oil using finely pulverized zeolite stones which are inserted into a permeable bag which is itself placed into the fryer, with or without food also being present.

The above methods either require the addition of powders to the oil, which is undesirable as they may contaminate and change the texture and taste of any food cooked therein or require a further container to be added to oil, which will often be problematical during use of the fryer.

US 2009/049994 discloses a filtering envelope, made of micro-filtration fabric, which is intended to separate out from the cooking oil small food debris products which are insoluble in the cooking oil.

### The WO 2008/015481 and WO 2009/019512 Inventions

WO 2008/015481 and WO 2009/019512 ("the BBM Patents") (BBM Technology Limited) disclose the use of cementious hydraulically set mixtures of white OPC clinker and white OPC, in the form of standalone briquettes, blocks, pellets or balls, which do not substantially leach calcium or magnesium into the cooking oils. The use of such treatment media has the advantage that it does not require existing frying equipment to be modified, the treatment media just being put into the oil. No filtration systems or pumps are required. Such treatment media can be used in situ in the oil during use and can prolong the life of the cooking oil so treated typically by up to 100 percent by removing free fatty acids and other polar oil breakdown compounds. They also reduce the amount of cooking oil absorbed by the food and thereby the amount of trans fatty acids digested.

However the use of the treatment media disclosed in the BBM Patents is associated with foaming in use during the deep fat frying process. Foaming is not the same as mere bubbling. When foaming occurs during the frying process water vapour produced during the cooking process is trapped just below an impermeable polymer layer at the top of the oil and cannot escape so that, as the volume of trapped gas increases, the oily impermeable layer of bubbles rises up the sides of the fryer and can bubble over, causing either injury, fire or damage to property as well as an unwelcome interruption to busy kitchen staff.

Foaming is encountered with the treatment media the subject of the BBM Patents particularly in cooking environments where a lot of hydrolysis takes place due to large amounts of wet food being cooked (for example frozen chips).

It may be possible to prevent (or at lease reduce) such foaming in practice by very tightly controlling the manufacturing process parameters associated with the manufacture of such treatment media but such tight control is not straight forward to achieve outside laboratory conditions, adds very considerably to the cost of production and limits the scale on which such manufacture can be economically carried out.

Without wishing to be bound by any theory it is thought that the relatively high calcium content of the treatment media disclosed in the BBM Patents promotes the release of calcium ions into the oil. Indeed the free fatty acids in cooking oil are expected to react with the calcium hydroxide available in such treatment media (especially when they come into contact with water or have not been dried thoroughly during production) to produce fatty acid salt soaps, the build-up of which in the oil tends to lead to the formation of a layer of calcium soap on the surface of the oil, which causes foaming.

This effect has been noted, for example, in US 5,597,600, column 2, lines 15 to 30 of which state that:-
"Most industrial fryers use Silasorb (Celite Corporation, Denver, Colo.) which is a synthetic calcium silicate, as their treatment media medium because it is very effective in lowering free fatty acid concentration. Silasorb lowers the free fatty acid (FFA) concentration of the oil by a combination of adsorption and neutralization. The use of Silasorb, however, often darkens the oil.
In addition, the product of the neutralization of a fatty acid with an alkaline metal is a fatty acid soap. The amount of soap formed is dependent on the amount of alkaline metal present, and the initial percentage of free fatty acids in the oil. When the soap level is high, the oil foams. The use of Silasorb in order to lower the free fatty acid concentration sometimes results in uncontrollable foaining."

Although the actual concentration of such calcium fatty acid salts in cooking oils, exposed to the treatment media disclosed in the BBM Patents may be very low in absolute terms (below 3 ppm and possibly even below 1 ppm) it can still give rise to foaming in practice as the polar calcium ions tend to become concentrated at the surface of the oil, from which they are pushed out.

The issue of foaming associated with the treatment media disclosed in the BBM Patents has become more significant as Commission Regulation (EU) 2017/2158, which came into effect on 11 April 2018, lays down various measures which those who carry out frying operations in a food business context are to adopt to mitigate the risks associated with acrylamides: those measures include the washing and soaking of potato products (such as french fries) for 30 minutes to up to 2 hours in cold water to reduce the sugar content, (see Official Journal of the European Union, L304/40 of 21.11.2017). Such soaking will increase the water content of e.g. french fries which will very likely lead to faster oil breakdown, more fatty acid production and more water entering into the cooking oil, which can be expected only to exacerbate the foaming issue experienced with the treatment media described in the BBM Patents.

It is known to reduce the flow rate of cooking oil over the surface of such a treatment media by at least partially enclosing the treatment media by a rigid foraminous enclosure such as for example a metal enclosure (such as a box with a lid) with holes or cut-outs in its sides, of the type disclosed in WO 2015/092387A1 (in particular Fig 1). Such metal boxes are effective at reducing foaming in part because they reduce the flow rate of cooking oil over the surface of the treatment media and also because they reduce the chance of the treatment media being very close to a heating element or heated surface of a fryer. However even when using such means, foaming still does occur in a small number of instances, especially when substantial frying activity is taking place or if the treatment media is located in close proximity to a heating element or frying surface. A large scale operator of frying equipment will not tolerate any instances of foaming and will reject a product that causes foaming even if it occurs very rarely in absolute number terms.

There is therefore a need for an in situ treatment method for cooking oils, which combines the advantages of the treatment media of the type disclosed in the BBM Patents, but which does not lead to the production of undesirable foaming in use even at a very low level.

### SUMMARY OF THE INVENTION

According to the present invention, there is provided a method for preserving cooking oil, including the features of claim 1.

Accordingly, the invention provides a method of treating cooking oil during frying operations which comprises *in situ* treatment of the oil with a solid treatment material of the type exemplified in the BBM Patents. The flow of oil over the surface of the cooking oil treatment media may be modified by using a close fitting enclosure (which may be thought of as being similar to an envelope or bag) made of a flexible non-rigid material, which substantially encloses the cooking oil treatment media to significantly further reduce the frequency of occurrence or eradicate foaming. The cooking oil treatment media which is located in the first close-fitting enclosure made of a flexible non-rigid material may then be located inside a rigid, foraminous enclosure such as for example a metal enclosure (such as a box with a lid) with holes or cut-outs in its sides. Such rigid outer container may be, for instance, of a box-like construction having two foraminous side walls. The base and top of such a container may both be continuous, that is to say, unperforated. The rigid outer container may be an entirely separate item to the cooking vessel. Alternatively, the container may be at least partly integral with the cooking vessel.

The cooking oil treatment media may be in any suitable form, for instance, a single block or loose material in granular form or in the form of beads. The cooking oil treatment media may contain a minor amount of microsilica. An air entraining agent may be added to the cooking oil treatment media during its manufacture so as to create numerous pores in the structure of the medium.

### BRIEF DESCRIPTION OF THE DRAWINGS

How the invention may be put into effect will now further be described by reference to the accompanying drawings.
Fig 1 shows a close fitting flexible enclosure of a type suitable for use with the invention.
Figs 2 & 3 show a close fitting flexible enclosure of a type suitable for use with the invention, enclosing a solid cooking oil treatment media.
Fig 4 shows a close fitting flexible enclosure of a type suitable for use with the invention, enclosing a solid cooking oil treatment media, but which itself is enclosed by a rigid outer enclosure.
Fig 5 shows a fryer with a side wall with a recess formed for locating a close fitting flexible enclosure of a type suitable for use with the invention, enclosing a solid cooking oil treatment media.
Fig 6 shows a fryer with a base with a recess for locating a close fitting flexible enclosure of a type suitable for use with the invention, enclosing a solid cooking oil treatment media.

### DESCRIPTION OF PREFERRED EMBODIMENTS

The invention is applicable to the in situ treatment of cooking oils or fats for use in all types of fryers having a capacity between 2 to beyond 100 litres. It may be used with the hydraulic cement cooking oil treatment media such as those described in WO 2008/015481, WO 2009/019512 and WO 2015/092387.

### Close-fitting flexible means

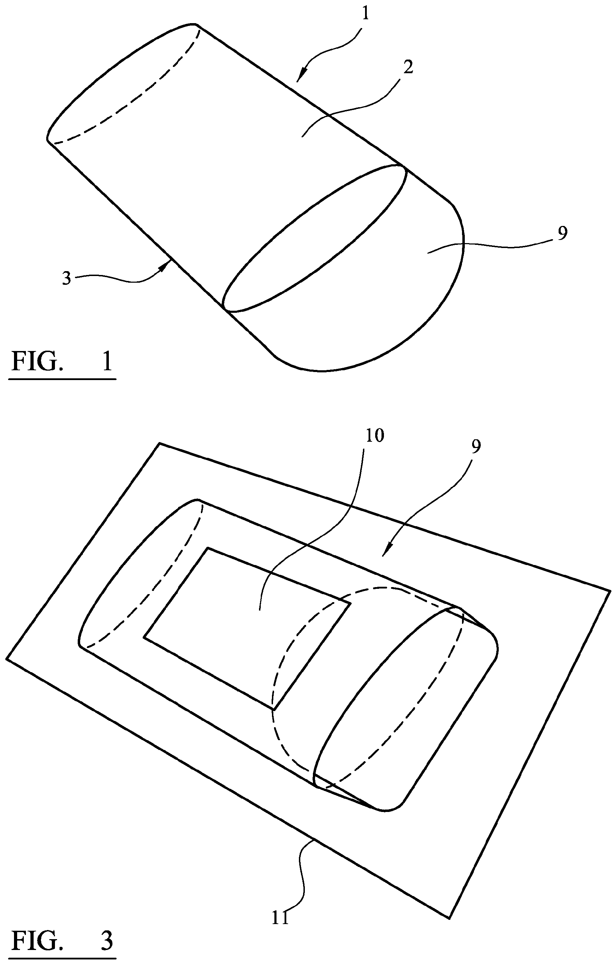

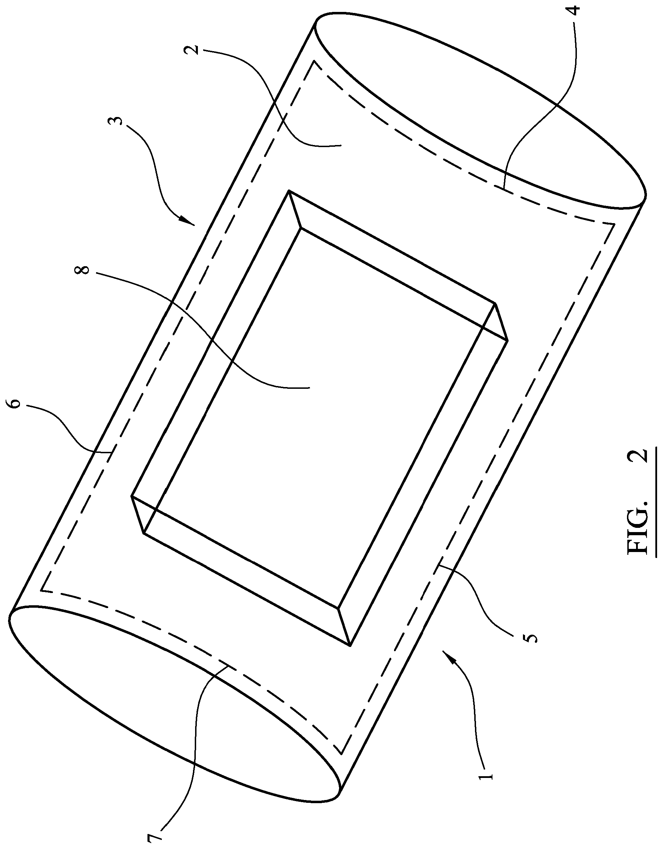

In one embodiment of the invention (depicted in Fig. 1) there is provided an enclosure (1) comprising a substantially continuous upper wall portion (2) and a substantially continuous lower wall portion (3). The two wall portions (2 & 3) can be made from one piece or from two pieces. As illustrated in Fig. 2, the edges (4 ,5, 6 & 7) of them may be sown together or joined together in other ways with which those skilled in the art will be familiary. The sowing or joining together may be more or less continuous, discontinuous. It is not necessary that the joining together be continuous and from our experience, at least some portion of the contact surface between the upper and lower wall portions is advantageously left unsown or not joined, so as to promote oil flow.

The lower wall portion (3) may be as long as the upper wall portion (2) or alternatively it may have an extended end section (9) that it can be tucked in to the space formed by the two portions in the manner of an envelope as shown in Fig 3.

Fig. 3 shows the close fitting flexible enclosure (9) containing an oil treatment media (10), in this case as one solid piece but the cooking oil treatment media could be in the form of balls or pellets or granules. The close fitting element is optionally enclosed in a rigid sided foraminous enclosure (11). We have found that the use of both the close fitting inner flexible enclosure and the rigid sided foraminous enclosure give optimal results in terms of prolonging the life of the cooking oil and also reducing foaming. In Fig 2 the oil treatment media (8) is shown inside the close fitting inner flexible enclosure (1).

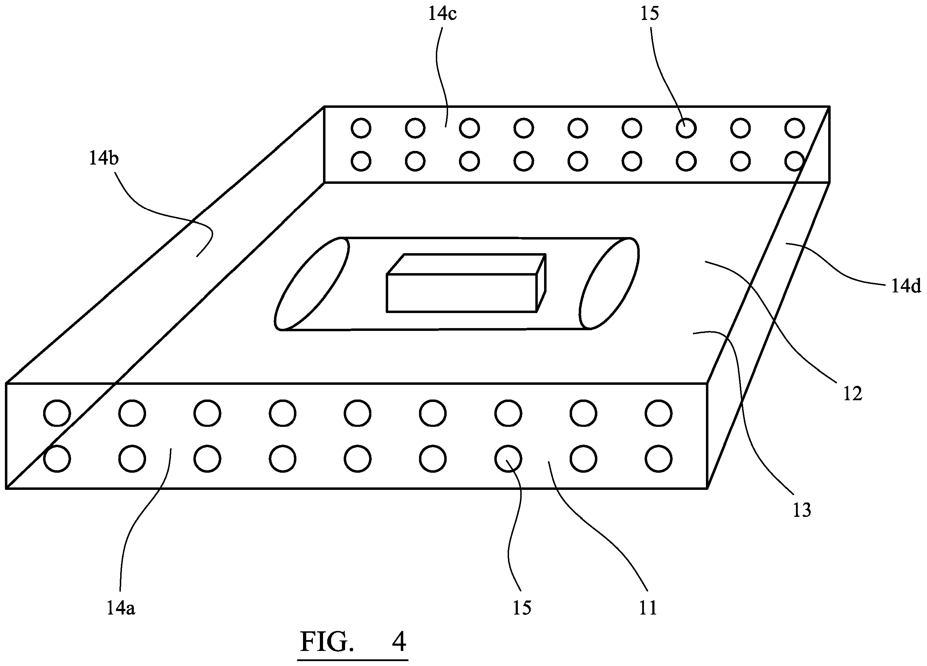

In one embodiment of the invention (depicted in Fig. 4) there is provided an outer rigid enclosure (11) comprising substantially continuous, lower upper and side walls, with the upper wall in the form of a slidable lid (12), a substantially continuous lower wall (13) and further having four side walls (14 (a), (b), (c) & (d)), at least two of which (14(a) & 14(d)) are perforated with holes (15) or are otherwise partial so as to allow diffusion of the cooking oil between the outside of the enclosure and the inside in a direction substantially perpendicular to the upper and lower walls. The lower and upper walls should not be perforated or partial for the invention described herein to work to best effect.

The upper sidewall (12) is in the form of a lid which can be securely placed onto, against or round the lower sidewalls. The lid may be hinged or otherwise connectably attached to the lower sidewalls so as to allow relative movement but may also simply detachably securely fit onto the said sidewalls of the said enclosure.

It will be readily apparent to the man skilled in the art that the invention herein described is not limited to enclosures which are in a cuboid or rectangular cuboid form: for example numerous polygonal, cylindrical, oval or triangular forms of container will also work satisfactorily as would containers made from side walls with sides of different lengths or shapes.

The side walls of the enclosure may (but do not need to be) welded or spot welded or riveted or otherwise connectably joined together. The side walls may be made as separate pieces or in one piece. The side walls can be made out of food grade stainless steel (grade 316) or out of any material which provides an acceptable degree of rigidity, impermeability, resistance to bacterial growth, which is non-toxic and has a melting point in excess of the temperature range at which frying typically takes place (160 to 210°C).

The close fitting inner flexible enclosure can be made from a suitable paper or fabric material. Many alternative types of paper or fabric can be used as will be recognised by a man skilled in the art. Whatever is used must be flexible to ensure a close fit around the cooking oil treatment media and must not release toxins in to the cooking oil. We have found that particularly suitable papers are those made from a mixture of cotton and wood pulp bonded together with a polyaminoamide-type wet strength resin.

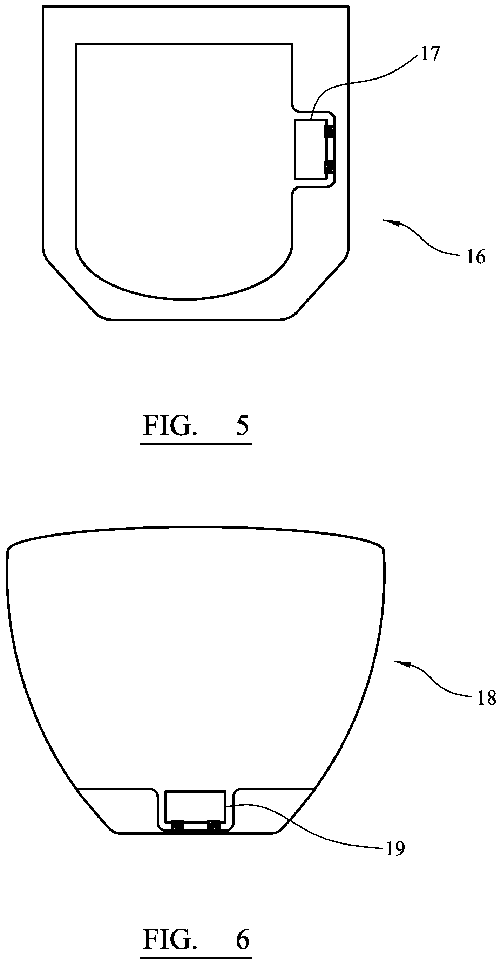

Fig. 5 shows a fryer (16) with a recess (17) for receiving an oil treatment medium (15) which can either simply be closely enclosed in the close fitting flexible enclosure of the type herein described or can in addition also be located in a rigid foraminous enclosure such as for example a metal enclosure (such as a box with a lid) with holes or cut-outs in its sides, of the type disclosed in WO 2015/092387A1 (in particular Fig 1).

It will be appreciated that the terms "flexible" or "rigid" are relative terms. What is important for the flexible close fitting enclosure is that it deforms in use sufficiently so as to enable it to fit very closely around the cooking oil treatment media so that there is intimate contact between a significant proportion of the surface of the cooking oil treatment media and the enclosure.

Fig. 6 shows a fryer (18) with a base with a recess (19) which works in a manner analogous to that shown in Fig 5. In either case there is a further advantage in that the cooking oil treatment media is located away from a heat source, close proximity to which during use is associated with foaming. Foaming is thereby reduced.

It has surprisingly been found that, by the use of an inner flexible close fitting enclosure (with or without the outer rigid foraminous enclosure), all or substantially all of the benefits obtained by the use of the cooking oil treatment media disclosed in the BBM Patents can be retained whilst at the same time the foaming phenomenon frequently experienced during the use of such cooking oil treatment media is either completely eradicated or else occurs very very much less frequently.

Without wishing to be bound in any way by any particular theory it is thought that the partial or complete covering or enclosure of the said cooking oil treatment media reduces the frequency of foaming or eradicates it completely as it decreases the concentration of calcium ions which leach out of the cooking oil treatment media by reducing the rate of flow, due to thermal convection, of cooking oil across the surface of the cooking oil treatment media. As the cooking oil typically contains between approximately 0.1 to 2 percent free fatty acids, depending upon, inter alia, the type of oil, what has been cooked in it, the frying temperature and the surface area of the oil exposed to air, this in turn reduces the rate at which calcium and in particular calcium hydroxide and calcium silicate hydrate minerals are attacked by the free fatty acids in the cooking oil.

The use of such an enclosure or a cover may also decrease the extent to which calcium hydroxide is dissolved in the water which exists in the cooking oil typically as a suspension or emulsion. Although the amount of water in cooking oil is generally relatively low (typically a few hundred parts per million in used oil), the solubility of calcium hydroxide in water is generally inversely related to its temperature (i.e. it decreases as the temperature of the water rises) and given that many cooking oils will be at or near room temperature for prolonged periods when not in use then it is likely that the water in the oil does materially dissolve the calcium hydroxide in the cooking oil treatment media. Calcium hydroxide is a major component of the cooking oil treatment media disclosed in the BBM Patents, being one of the main reaction products of the main cement minerals alite and belite with water. It typically accounts for between twenty to thirty five percent by weight of the cooking oil treatment media disclosed in the BBM Patents.

Thirdly the close fitting flexible cover may also simply protect the cooking oil treatment media from water dropping down from the basket or other food containment means, when high water content food is added to the oil: for example solidly frozen chips contain a lot of ice which has a relatively high latent heat capacity and therefore the melting of which materially reduces the temperature of the cooking oil possibly allowing, given that the water has a higher density than the cooking oil, some of the emerging water to simply fall downwards on to the cooking oil treatment media.

Enclosures or covers of the type herein described also prevent food debris from covering the cooking oil treatment media or at least reduce the extent to which that happens. Such food debris may accelerate the degradation of the surface of the said cooking oil treatment media.

A further advantage of using an enclosure or cover of the type described herein is that it makes it practical to use relatively large numbers of smaller separate cooking oil treatment media. This is advantageous as the use of a plurality of small cooking oil treatment media materially increases the surface area of the cooking oil treatment media and promotes their efficacy during operation.

How the invention may be put into effect will now be further described by reference to the following examples.

Cooking oil treatment media were made with Alborg white cement clinker and Alborg White OPC. Alborg white clinker is made using an extremely pure limestone originating from a marine deposit which is now located in Denmark. A typical composition of the Alborg clinker used is:-
SiO₂ 25.0%
Al₂O₃ 2.00%
Fe₂O₃ 0.30%
CaO 69.0

This gives a calculated Bogue composition as follows:-
C₃S 65.0%
C₂S 21.0%
C₃A 5.0%
C₄AF 1.0%
CaSO₄ 0%

The equivalent typical figures for the OPC used in this experiment were:-
SO₃ 2.03%
SiO₂ 24.4%
Aₗ₂O₃ 1.97%
Fe₂O₃ 0.34%
CaO 68.6%
MgO 0.58%
Cl 0.01%
TiO₂ 0.09%
P₂O₅ 0.30%
K₂O 0.16%
Na₂O 0.19%

Thus giving a calculated Bogue composition (corrected to take into account a free lime content of about 3%):
C₃S 66.04%
C₂S 20.1%
C₃A 4.64%
C₄AF 1.04%
CaSO₄ 3.45%

Importantly the clinker has a very low free iron content which is important as iron is a powerful pro-oxidant trace metal, (see for example Sonntag 1979 in Bailey's industrial Oil and fat Products, New York, John Wiley and Sons, Vol 1. pp 152).

The mix to make the cooking oil treatment media comprised three parts of clinker to one part of OPC. Thorough mixing of the clinker and OPC using an industrial mixer took place and then sufficient water was added to give a good paste.

The paste was then placed into moulds of the type depicted in figures 1 to 4 of WO/2013/121206 and as further described in that patent application and were then allowed to cure until fully set. Thereafter they were dried in an industrial oven for 72 hours at 220°C to remove excess water and were then sealed in water impermeable wrapping.

The dimensions of the cooking oil treatment media were approximately 15 cm x 2 cm x 9 cm with 15 holes each with a diameter of approximately 2 cm: (these figures ignore slight tapering of the cooking oil treatment media to facilitate extraction from the mould).

### Frying Trials

Four sets of frying trials were then conducted with these cooking oil treatment media as well as a further frying trial with no cooking oil treatment media:
Trial A - no cooking oil treatment media present.
Trial B - two cooking oil treatment media present but not located in either a rigid foraminous metal enclosure (a box with a lid) with holes or cut-outs in its sides, of the type disclosed in WO 2015/092387A1 (in particular Fig 1) or a close fitting flexible enclosure of the type herein described.
Trial C - two cooking oil treatment media present and located in a rigid foraminous metal enclosure (a box with a lid) with holes or cut-outs in its sides, of the type disclosed in WO 2015/092387A1 (in particular Fig 1) but not in a close fitting flexible enclosure of the type herein described.
Trial D - two cooking oil treatment media present and located in a close fitting flexible enclosure of the type herein described, which was not itself located in a rigid foraminous metal enclosure (a box with a lid) with holes or cut-outs in its sides, of the type disclosed in WO 2015/092387A1 (in particular Fig 1).
Trial E - two cooking oil treatment media present and located in a close fitting flexible enclosure of the type herein described, which was itself located in a rigid foraminous metal enclosure (a box with a lid) with holes or cut-outs in its sides, of the type disclosed in WO 2015/092387A1 (in particular Fig 1) or a close fitting flexible enclosure of the type herein described but no close fitting flexible enclosure of the type herein described.

Oils develop acidity during frying due to oxidation, hydrolysis and other decomposition routes. Different oils have different oxidation and hydrolysis rates. The free fatty acid level in any given oil in a fryer is determined by the starting FFA level, the subsequent rate of FFA generation and the amount of its elimination by distillation and absorption by food. It is essential therefore if meaningful data on FFA levels are to be obtained to use the same oil throughout all experiments. The trials described herein were all conducted with the same batch of KTC vegetable oil, which contains E900 (PDMS anti-foaming agent).

Frying operations were carried out, in an electric fryer containing 20 litres of KTC vegetable oil, using 9 kg of frozen chips all of the same brand fried each day. Nine hundred grams of frozen Tesco potato fries were fried in KTC vegetable oil for four minutes at an initial oil temperature of 190°C. The fries were then removed and the oil was allowed to reach a temperature of 190°C before frying the next batch of potato fries. Ten such nine hundred gram batches of potato fries were fried on each trial day.

In the four frying trials involving cooking oil treatment media, two cooking oil treatment media were located in the oil. The cooking oil treatment media were always located below the heating element and left in situ until either foaming occurred or the total polar content (determined by the use of a well-known Testo 270 testing metre) reached 25, which is the maximum safe level widely recommended and mandated by law in certain European countries. Total polar content levels in excess of 25 are associated with (a) excessive smoking as substantial amounts of fatty acids boil off (and are a fire hazard) and also (b) partially burnt fried food which is greasy and soggy as too much oil gets into the food due to the presence of too much surfactant. The temperature of the oil was always kept at or slightly below 190°C.

Twenty sets of trials were run for each condition and the results were averaged so as to give a representative result.

### Results

| Trial | A | B | C | D | E |
|---|---|---|---|---|---|
| Foaming % | - | 25 | 5 | 0 | 0 |
| Days to reach TPC of 25 (to nearest whole day)* | 5 | 10 | 10 | 10 | 10 |

| | | | | | |
|---|---|---|---|---|---|
| ^{∗}Only includes trials where there was no foaming. | | | | | |

It can be seen that the presence of the cooking oil treatment media typically extended the period it took the oil to reach a TPC of 25 from just over five days to just under ten days. However foaming occurred in 25% of cases where the cooking oil treatment media were used without a box or bag (on average on day 7).

When the trials were run again with the cooking oil treatment media located in a rigid foraminous metal enclosure (a box with a lid) with holes or cut-outs in its sides, of the type disclosed in WO 2015/092387A1 (in particular Fig 1), the oil extension performance was not affected. Foaming reduced to just over 5%.

However in the third and fourth trials with cooking oil treatment media, again the oil extension was not affected but there were no instances of foaming at all in the forty frying runs conducted, which was an outstanding result.

## Claims

1. A method of preserving cooking oil, including by reducing the extent of foaming and/or the build-up of free fatty acids in the cooking oil during its use in the frying of food, the method comprising providing in a cooking vessel (16) a body of cooking oil, locating in said body of cooking oil a solid, calcium-containing filtering medium (1), locating in said body of cooking oil means (2) for reducing the extent of flow of oil over the surface of said filtering medium during the food frying, locating food within said body of oil and heating the cooking oil to effect frying of the food, **characterised in that** the means for reducing the extent of flow of oil over the surface of the filter medium is a non-metallic flexible enclosure (11), which surrounds the filtering medium during use.

2. A method according to Claim 1, wherein the enclosure is a close fit about the filtering medium.

3. A method according to Claim 1 or Claim 2, wherein the enclosure is made from paper.

4. A method according to Claim 3, wherein the paper contains cotton and wood pulp bonded with a polyaminoamide-type wet strength resin.

5. A method according to any of the preceding claims, wherein the enclosure is located in an outer rigid sided foraminous barrier.

6. A method according to Claim 5, wherein the barrier is a container having at least two foraminous side walls.

7. A method according to Claim 6, wherein the base and top of the container are both continuous.

8. A method according to Claim 6 or Claim 7, wherein the container is at least partly integral with the cooking vessel.

9. A method according to any of the preceding claims, wherein the filtering medium contains a minor amount of microsilica.

10. A method according to any of the preceding claims, wherein an air entraining agent is added to the filtering medium during its manufacture so as to create numerous pores in the structure of the medium.

## Patentansprüche

1. Verfahren zum Konservieren von Speiseöl, einschließlich durch Verringern des Ausmaßes von Schaumbildung und/oder des Aufbaus freier Fettsäuren in dem Speiseöl während seiner Verwendung beim Frittieren von Nahrungsmitteln, das Verfahren umfassend ein Bereitstellen eines Speiseölkörpers in einem Kochgefäß (16), ein Anordnen eines festen, kalziumhaltigen Filtermediums (1) in dem Speiseölkörper, ein Anordnen von Einrichtungen (2) zum Verringern des Ausmaßes einer Ölströmung über die Oberfläche des Filtermediums während des Frittierens von Nahrungsmitteln in dem Speiseölkörper, Anordnen von Nahrungsmitteln in dem Ölkörper und Erhitzen des Speiseöls, um ein Frittieren der Nahrungsmittel zu bewirken, **dadurch gekennzeichnet, dass** die Einrichtungen zum Verringern des Ausmaßes einer Ölströmung über die Oberfläche des Filtermediums eine nicht-metallische flexible Umhüllung (11) ist, die das Filtermedium während des Gebrauchs umgibt.

2. Verfahren nach Anspruch 1, wobei die Umhüllung das Filtermedium eng umschließt.

3. Verfahren nach Anspruch 1 oder Anspruch 2, wobei die Umhüllung aus Papier gefertigt ist.

4. Verfahren nach Anspruch 3, wobei das Papier Baumwolle und Holzpulpe enthält, die mit einem nassfesten Harz des Typen Polyaminoamid gebunden sind.

5. Verfahren nach einem der vorherigen Ansprüche, wobei sich die Umhüllung in einer äußeren, starren, durchlöcherten Barriere befindet.

6. Verfahren nach Anspruch 5, wobei die Barriere ein Behälter ist, der mindestens zwei durchlöcherte Seitenwänden aufweist.

7. Verfahren nach Anspruch 6, wobei sowohl der Boden als auch die Oberseite des Behälters durchgehend sind.

8. Verfahren nach Anspruch 6 oder Anspruch 7, wobei der Behälter zumindest teilweise mit dem Kochgefäß integriert ist.

9. Verfahren nach einem der vorherigen Ansprüche, wobei das Filtermedium eine geringe Menge an Mikrosilika enthält.

10. Verfahren nach einem der vorherigen Ansprüche, wobei zu dem Filtermedium während seiner Herstellung ein Luftporenbildner hinzugefügt wird, um zahlreiche Poren in der Struktur des Mediums zu erzeugen.

## Revendications

1. Procédé de conservation d'huile de cuisson, incluant la réduction du degré de moussage et/ou de l'accumulation d'acides gras libres dans l'huile de cuisson pendant son utilisation dans la friture d'aliments, le procédé comprenant la fourniture dans une cuve de cuisson (16) d'une masse d'huile de cuisson, le placement dans ladite masse d'huile de cuisson d'un milieu filtrant solide contenant du calcium (1), le placement dans ladite masse d'huile de cuisson de moyens (2) de réduction du degré d'écoulement d'huile sur la surface dudit milieu filtrant pendant la friture des aliments, le placement d'aliments dans ladite masse d'huile et la mise en chauffe de l'huile de cuisson pour effectuer la friture des aliments, **caractérisé en ce que** les moyens de réduction du degré d'écoulement d'huile sur la surface du milieu filtrant est une enceinte flexible non métallique (11), qui entoure le milieu filtrant pendant l'utilisation.

2. Procédé selon la revendication 1, dans lequel l'enceinte est en ajustement serré autour du milieu filtrant.

3. Procédé selon la revendication 1 ou la revendication 2, dans lequel l'enceinte est en papier.

4. Procédé selon la revendication 3, dans lequel le papier contient de la pâte de coton et de bois liée avec une résine de résistance à l'état humide de type polyaminoamide.

5. Procédé selon l'une quelconque des revendications précédentes, dans lequel l'enceinte est située dans une barrière perforée à face extérieure rigide.

6. Procédé selon la revendication 5, dans lequel la barrière est un récipient ayant au moins deux parois latérales perforées.

7. Procédé selon la revendication 6, dans lequel la base et le sommet du récipient sont tous deux continus.

8. Procédé selon la revendication 6 ou 7, dans lequel le récipient est au moins en partie solidaire de la cuve de cuisson.

9. Procédé selon l'une quelconque des revendications précédentes, dans lequel le milieu filtrant contient une quantité mineure de microsilice.

10. Procédé selon l'une quelconque des revendications précédentes, dans lequel un agent entraîneur d'air est ajouté au milieu filtrant lors de sa fabrication de manière à créer de nombreux pores dans la structure du milieu.
